# EUROPÄISCHE PATENTSCHRIFT

(11) **EP 1 335 443 B1**
(45) Veröffentlichungstag und Bekanntmachung des Hinweises auf die Patenterteilung: **09.07.2008**
(21) Anmeldenummer: 03001082.1
(22) Anmeldetag: 18.01.2003
(51) Int. Cl.: H01M 10/16, H01M 2/28

(54) **Schwingungsfester Akkumulator und Verfahren zu dessen Herstellung**
Vibration resistant battery and method for its manufacturing
Batterie résistante aux vibrations et sa méthode de fabrication

(30) Priorität: 12.02.2002 DE 10205658
(43) Veröffentlichungstag der Anmeldung: 13.08.2003
(73) Patentinhaber: Deutsche EXIDE Standby GmbH, 63654 Büdingen (DE)
(72) Erfinder: Kramm, Friedrich, 63654 Büdingen (DE); Imhof, Wolfgang, 63699 Kefenrod (DE); Schmidt-Lukasch, Günter, Dr., 64665 Alsbach-Hähnlein (DE)
(74) Vertreter: Weber, Roland

(56) Entgegenhaltungen:
- US-A- 4 495 259
- US-A- 5 607 797
- PATENT ABSTRACTS OF JAPAN Bd. 1998, Nr. 10, 31. August 1998 (1998-08-31) -& JP 10 144269 A (FURUKAWA BATTERY CO LTD:THE), 29. Mai 1998 (1998-05-29)
- PATENT ABSTRACTS OF JAPAN Bd. 013, Nr. 123 (E-733), 27. März 1989 (1989-03-27) & JP 63 291361 A (SHIN KOBE ELECTRIC MACH CO LTD), 29. November 1988 (1988-11-29)

## Beschreibung

Die vorliegende Erfindung betrifft einen schwingungsfesten Akkumulator mit einem Gehäuse, das eine oder mehrere Zellengefäße mit jeweils einem Plattenblock, bestehend aus positiven und negativen Plattensätzen, umfaßt, wobei die einzelnen Platten in einem Plattenblock durch Separatoren voneinander getrennt sind, die Platten jedes Plattensatzes Fahnen aufweisen und durch Polbrücken elektrisch miteinander verbunden sind. Des weiteren betrifft die Erfindung ein Verfahren zur Herstellung eines solchen schwingungsfesten Akkumulators.

Akkumulatoren, insbesondere Blei-Säure-Akkumulatoren, werden häufig in Anwendungen eingesetzt, bei denen sie starken Schwingungs- bzw. Rüttelbelastungen ausgesetzt sind. Hierunter fallen beispielsweise Starterbatterien in Personenkraftwagen, Lastkraftwagen und Bussen. Besonders hohen Schwingungsbelastungen sind die Akkumulatoren in geländegängigen Fahrzeugen ausgesetzt, wie z.B. in militärischen Landfahrzeugen, Bau- und Landmaschinen. Die Anforderungen an die Schwingungs- bzw. Rüttelfestigkeit sind häufig Normen unterworfen, die meist ohne besondere konstruktive Maßnahmen am Akkumulator nicht erfüllt werden. So unterliegen beispielsweise Akkumulatoren für militärische Anwendungen in Deutschland den Bundeswehrprüfnormen für Verteidigungsgerät. Nach der Bundeswehrprüfnorm VG 96924 müssen Akkumulatoren für militärische Anwendungen einen Schwingungsfestigkeitstest bestehen, bei dem die Akkumulatoren in den drei Hauptachsen X (horizontal, parallel zu den Akkumulatorplatten), Y (horizontal, im rechten Winkel zu den Akkumulatorplatten) und Z (vertikal) für eine Dauer von jeweils zwei bis drei Stunden unter bestimmten Frequenzvorgaben gerüttelt werden. Anschließend erfolgt eine Hochstrombelastung, die einen Startvorgang des mit dem Akkumulator ausgestatteten Fahrzeugs simuliert.

Herkömmliche Akkumulatoren, wie sie in PKWs eingesetzt werden, erfüllen die strengen Anforderungen der Normen für militärische Landfahrzeuge oder auch andere stark belastete Fahrzeuge in der Regel nicht. Ursachen für den Ausfall von Akkumulatoren wie zum Beispiel beschrieben in Druckschrift US 5 607 797, bei Schwingungs- bzw. Rüttelbeanspruchung sind Abriß von Endpolen, Interzellverbindungen, den Fahnen der Platten sowie Bruch von Polbrücken. Weiterhin tritt häufig beim Mitschwingen der Platten eine Ablösung der Aktivmasse vom Masseträger (z.B. vom Bleigitter) auf, was ebenfalls zum Ausfall des Akkumulators führen kann.

Derzeit werden verschiedene konstruktive Ansätze zur Fixierung der Platten des Plattenblocks in den Zellengefäßen eines Akkumulators verfolgt. Bei einem bekannten Aufbau werden die Platten des Akkumulators am Boden der Zellengefäße durch Kunststoff oder Vergußmasse fixiert. Dies verhindert jedoch nicht den Abriß der Endpole und der Interzellverbindungen sowie der Fahnen im oberen Bereich des Plattenblocks. Bei einer weiteren bekannten Konstruktion wird der Plattenblock durch Kunststoffteile in den Zellengefäßen niedergehalten, wobei die Kunststoffteile an den Zellendeckeln befestigt und auf den Separatoren fixiert sind. Dies verhindert jedoch nicht den Ausfall der Akkumulatoren beim Rütteln in horizontaler Richtung, d.h. beim Rütteln in Richtung der oben genannten X- und Y-Achsen. Bei einer weiteren Variante bekannter Akkumulatoren soll die Rüttelfestigkeit dadurch hergestellt werden, daß zwischen den Platten und der senkrechten Seite der Polbrücken eine Kunststoff- bzw. Vergußmasse eingebracht wird. Dies verhindert jedoch nicht den Abriß der Fahnen und den Ausfall der Aktivmasse aus den Platten, insbesondere nicht beim Rütteln senkrecht zur Plattenfläche, d.h. in Richtung der oben genannten Y-Achse. Bei einer weiteren bekannten Variante wird ein Zwei-Komponenten-Epoxid-Verguß auf die Plattensätze vor die Polbrükken und in die seitlichen Bereiche der Zellen eingebracht. Hierdurch wird die Schwingungsfestigkeit bereits deutlich verbessert, da das Material unter die Polbrücken verläuft und eine harte Plattensatzfestlegung bildet. Mit Nachteil verläuft jedoch hierbei die Vergußmasse beim Einbringen bzw. Aufbringen auf die Plattensätze stark in Richtung der Zellenmitte über die Platten und Separatoren, so daß die verbleibende Öffnung für die später stattfindende Füllung mit Elektrolyt sehr klein ist.

Die Aufgabe der vorliegenden Erfindung besteht demnach darin, einen gegenüber dem Stand der Technik verbesserten schwingungsfesten Akkumulator bereitzustellen, der hohen Belastungen standhält, vergleichsweise einfach und preiswert herzustellen ist und ein sicheres Einfüllen des Elektrolyten erlaubt.

Erfindungsgemäß wird diese Aufgabe durch einen schwingungsfesten Akkumulator der eingangs genannten Art gelöst, der dadurch gekennzeichnet ist, daß eine aushärtbare Vergußmasse vorgesehen ist, welche den Plattenblock in einem Zellengefäß im wesentlichen schwingungsfest fixiert, wobei die Vergußmasse über den Platten des Plattenblocks verläuft und den Zwischenraum zwischen der Oberseite des Plattenblocks und den Polbrücken wenigstens teilweise ausfüllt und wobei eine Vergußleitbrücke auf der Oberseite des Plattenblocks vorgesehen ist, welche einen von Vergußmasse freien Bereich auf der Oberseite des Plattenblocks begrenzt.

Akkumulatoren, wie sie beispielsweise für militärische und zivile Landfahrzeuge eingesetzt werden, bestehen in der Regel aus einem Gehäuse, in dem mehrere Zellen, z.B. Blei-Säure-Zellen, in Reihe hintereinander geschaltet miteinander verbunden sind. Das Gehäuse weist hierfür mehrere Kammern auf, die sogenannten Zellengefäße. In jedem Zellengefäß ist jeweils ein Plattenblock mit positiven und negativen Plattensätzen untergebracht. Die einzelnen Platten sind durch Separatoren voneinander getrennt, die den elektrischen Strom nicht leiten. Die Platten jedes Plattensatzes weisen Fahnen auf, über welche alle Platten eines Plattensatzes mit einer Polbrücke elektrisch miteinander verbunden sind. In der Regel weisen die Fahnen der Platten in vertikaler Richtung nach oben aus dem Plattenblock heraus, und die Fahnen und Polbrücken der positiven und negativen Plattensätze sind auf einander gegenüberliegenden Seiten oberhalb der Platten angeordnet.

Die Anzahl der in dem Akkumulator in Reihe hintereinander geschalteten Zellen richtet sich nach der von dem Akkumulator benötigten Spannung. Häufig sind in einem Gehäuse zwei, drei, sechs oder mehr Zellen hintereinander in Reihe miteinander verbunden. Das Gehäuse weist also eine entsprechende Anzahl von Zellen auf. Die elektrische Verbindung zweier Zellen erfolgt durch Interzellverbinder zwischen benachbarten Zellengefäßen, wobei die Interzellverbinder in der Regel einstückig mit den Polbrücken ausgebildet sind und sich durch die Wände der zueinander benachbarten Zellengefäße erstrecken. Die erste und letzte der in Reihe miteinander verbundenen Zellen weist jeweils eine Polbrücke mit einem Endpol auf, welcher durch den Gehäusedeckel für einen elektrischen Anschluß nach außen geführt ist.

Eine besonders schwingungsempfindliche Stelle der Akkumulatoren ist die Verbindung zwischen den Fahnen der Elektrodenplatten und den Polbrücken. Insbesondere diese Verbindung wird durch die erfindungsgemäße Anordnung mit Vorteil stabilisiert und ein Abreißen der Fahnen oder der Polbrücken durch Fixierung der Fahnen relativ zu den Polbrücken verhindert.

Ein wesentliches Element der vorliegenden Erfindung ist das Vorsehen einer Vergußleitbrücke über jedem Plattenblock. Bei der Herstellung des erfindungsgemäßen schwingungsfesten Akkumulators wird eine solche Vergußleitbrücke auf den bereits in das Gehäuse eingesetzten Plattenblock aufgelegt und die Vergußmasse eingebracht. Bei einer bevorzugten Ausführungsform der Erfindung ist die Vergußleitbrücke so ausgebildet, daß sie um den Bereich auf der Oberseite des Plattenblocks, der von Vergußmasse freigehalten werden soll, ein in sich geschlossenes Profil aufweist. Beim Einbringen wird die Vergußmasse außerhalb des freizuhaltenden Bereichs auf der Oberseite des Plattenblocks eingefüllt. Die Vergußleitbrücke weist auf dieser Außenseite, d.h. auf der dem freizuhaltenden Bereich auf der Oberseite des Plattenblocks abgewandten Seite, Ablaufflächen für ein Ablaufen der Vergußmasse beim Einbringen in den Akkumulator auf. Die Vergußmasse verläuft beim Einbringen außerhalb des freizuhaltenden Bereichs auf der Oberseite des Plattenblocks bis hin zu den Wänden des Zellengefäßes und dabei auch bis in die Zwischenräume zwischen den Fahnen der Platten und unter die über den Fahnen angebrachten Polbrücken. Das Profil der Vergußleitbrücke weist eine Höhe auf, die von der Oberseite der Separatoren des Plattenblocks, auf welche die Vergußleitbrükke aufgelegt ist, bis zu der in vertikaler Richtung tiefsten Erstreckung der Polbrücken reicht. Üblicherweise ragen die Separatoren zumindest in vertikaler Richtung nach oben etwas über die Platten hinaus. Vorteilhaft reicht die Höhe des Profils der Vergußleitbrücke bis über die in vertikaler Richtung tiefste Erstreckung der Polbrücken hinaus. Hierdurch wird sichergestellt, daß die Vergußmasse so eingefüllt werden kann, daß sie den Zwischenraum zwischen dem Plattenblock und der Unterseite der Polbrücken vollständig ausfüllt, ohne daß sie dabei über das Profil der Vergußleitbrücke in den freizuhaltenden Bereich auf der Oberseite des Plattenblocks hineinfließt. Nach dem Aushärten der Vergußmasse sind die Fahnen der Platten fest in die Vergußmasse eingebettet und auch die Polbrücken gegenüber dem Plattenblock durch Auffüllen wenigstens eines Teiles des dazwischen liegenden Hohlraums schwingungsfest fixiert.

Erfindungsgemäß bevorzugt verbleibt die Vergußleitbrücke nach dem Einfüllen und Aushärten der Vergußmasse in dem Akkumulator. Eine alternative Ausführungsform der Erfindung sieht jedoch auch das Entfernen der Vergussleitbrücke nach dem Einfüllen und Aushärten der Vergussmasse vor. Nach dem Aushärten der Vergußmasse wird der Akkumulator mit Elektrolyt befüllt, was auf bekannte Art und Weise erfolgt. Der erfindungsgemäße Aufbau des Akkumulators bietet dabei den Vorteil, daß für das Einfüllen des Elektrolyten, insbesondere bei Verwendung von Gelelektrolyten, gegenüber bekannten vergossenen Akkumulatoren ein größerer freier Bereich auf der Oberseite des Plattenblocks zur Verfügung steht. Die Fläche dieses freien Bereiches wird durch die aufgrund der Vergußleitbrücke von Vergußmasse freigehaltene Fläche definiert. Bei herkömmlichen Akkumulatoren ist die Vergußmasse stets weit bis in den mittleren Bereich auf der Oberseite des Plattenblocks hineingelaufen.

Vorteilhaft besteht die Vergußleitbrücke aus Kunststoff, besonders bevorzugt aus einem elektrolytbeständigen Kunststoff, damit sie, wenn sie in dem Akkumulator verbleibt, von dem eingefüllten Elektrolyten nicht angegriffen wird. Hierdurch wird die Stabilität des Vergusses in Verbindung mit der Vergußleitbrücke sichergestellt.

Besonders bevorzugt ist die Vergußleitbrücke aus Polyvinylchlorid (PVC), Polypropylen (PP), Polyethylen (PE), Polystyrol (PS), Acrylbutadienstyrol (ABS), Styrolacrylnitril (SAN) oder Polycarbonat hergestellt. Die erfindungsgemäße Vergußleitbrücke läßt sich aus diesen Materialien auf einfache Weise preiswert, z.B. im Spritzguss- oder Tiefziehverfahren, herstellen.

Bei einer alternativen Ausführungsform weist die Vergußleitbrücke zwei im wesentlichen geradlinige Profilteile auf, welche durch einen Distanzhalter miteinander verbunden und im wesentlichen parallel und in einem Abstand zueinander angeordnet sind. Die beiden parallel zueinander angeordneten Profilteile werden bei dieser Ausführungsform der Erfindung vor dem Vergießen so auf die Oberseite des jeweiligen Plattenblocks aufgelegt, daß jedes der beiden Profile einer der beiden einander gegenüber angeordneten Polbrücken zugewandt ist. Vorteilhaft weisen die beiden im wesentlichen geradlinigen, parallel zueinander angeordneten Profilteile eine solche Länge auf, daß sie nach dem Einsetzen auf die Oberseite des Plattenblocks die Wände der Zellengefäße gerade berühren. Hierdurch wird verhindert, daß eingefüllte Vergußmasse an den Enden der Profilteile vorbei in den mittleren Bereich auf der Oberseite des Plattenblocks verläuft. Die Vergußmasse wird bei dieser Ausführungsform der erfindungsgemäßen Vergußleitbrücke auf den beiden jeweils den Polbrücken zugewandten Seiten eingefüllt. Im mittleren Bereich auf der Oberseite des Plattenblocks wird hierdurch mit Vorteil ein Bereich über die gesamte Breite des Plattenblocks von Vergußmasse freigehalten. Hierdurch wird einerseits Vergußmasse eingespart und andererseits ein größerer freier Bereich für das Einfüllen des Elektrolyten über die gesamte Breite des Plattenblocks bereitgestellt.

Die Aufgabe der vorliegenden Erfindung wird auch durch ein Verfahren zur Herstellung eines schwingungsfesten Akkumulators gelöst, bei dem man in ein Gehäuse, das ein oder mehrere Zellengefäße aufweist, jeweils einen Plattenblock mit positiven und negativen Plattensätzen in jeweils ein Zellengefäß einsetzt, wobei die einzelnen Platten in einem Plattenblock durch Separatoren voneinander getrennt sind und die Platten jedes Plattensatzes Fahnen aufweisen, Polbrücken anbringt, welche die Platten jedes Plattensatzes elektrisch miteinander verbinden, auf die Oberseite des Plattenblocks eine Vergußleitbrücke auflegt und eine aushärtbare Vergußmasse so einbringt, daß sie über den Platten des Plattenblocks angeordnet ist, den Zwischenraum zwischen der Oberseite des Plattenblocks und den Polbrücken wenigstens teilweise ausfüllt und die Vergußleitbrücke einen von Vergußmasse freien Bereich auf der Oberfläche des Plattenblocks begrenzt.

Die Erfindung betrifft auch die Vergußleitbrücke selbst in allen Ausführungsformen, wie sie hierin beschrieben sind.

Weitere Vorteile, Merkmale und Ausführungsformen der vorliegenden Erfindung werden nun anhand der nachfolgenden Beschreibung einiger anhängender Figuren erläutert.
- Figur 1: zeigt eine Draufsicht auf einen erfindungsgemäßen Akkumulator vor dem Einbringen der Vergußmasse;
- Figur 2: zeigt einen Querschnitt durch eine Akkumulatorzelle in der Ebene des Plattenblocks ohne Vergußleitbrücke und Vergußmasse;
- Figur 3: zeigt die gleiche Ansicht einer Akkumulatorzelle wie in Figur 2, jedoch mit Vergußleitbrücke und Vergußmasse;
- Figur 4: zeigt verschiedene Ausführungsformen erfindungsgemäßer Vergußleitbrücken von oben und im Querschnitt;
- Figur 5: zeigt eine Zelle des Akkumulators aus Figur 1 von oben mit Vergußmasse.

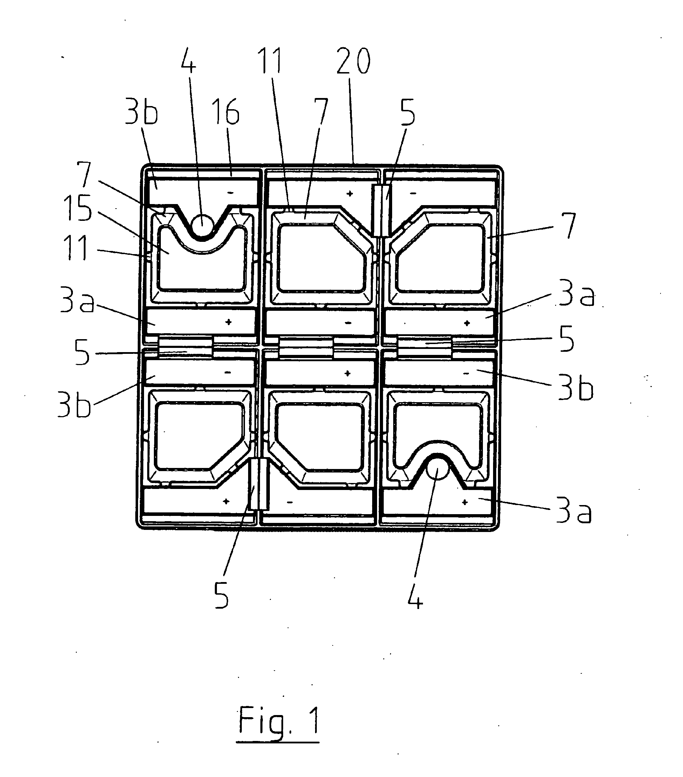

In Figur 1 ist ein erfindungsgemäßer Akkumulator in einem Gehäuse 20 mit sechs Zellengefäßen 16 dargestellt. Die sechs Akkumulatorzellen sind in dem Gehäuse 20 in Reihe durch elektrisch leitende Interzellverbinder 5 miteinander verbunden. Jede Zelle umfaßt einen Plattenblock 15, bestehend aus einem positiven und einem negativen Plattensatz (nicht dargestellt), wobei die einzelnen Platten durch Separatoren voneinander getrennt sind. In dem Gehäuse 20 sind die einzelnen Zellengefäße 16 durch Wände in dem Gehäuse 20 voneinander getrennt. Die Platten jedes positiven Plattensatzes in einer Zelle sind durch Polbrücken 3a elektrisch leitend miteinander verbunden. Ebenso sind die Platten jedes negativen Plattensatzes einer Zelle über Polbrücken 3b elektrisch leitend miteinander verbunden. Die elektrische Verbindung zwischen zwei in Reihe miteinander verbundenen Zellen erfolgt durch Verbindung jeweils der positiven Polbrücke 3a einer Zelle mit der negativen Polbrücke 3b der anderen Zelle über Interzellverbinder 5, welche die Polbrücken elektrisch miteinander verbinden und durch Öffnungen in den Wänden der Zellengefäße hindurchtreten. Die erste und die letzte der in Reihe miteinander verbundenen Zellen weist jeweils einen Endpol 4 für das Abgreifen des elektrischen Stromes von dem Akkumulator auf.

Jede der Zellen weist jeweils eine Vergußleitbrücke 7 auf, die auf der Oberfläche des jeweiligen Plattenblocks 15 aufgelegt ist. Jede der Vergußleitbrücken 7 ist mit in der Draufsicht nach außen gerichteten Distanzhaltern 11 versehen, welche der Positionierung der Vergußleitbrücke 7 in dem jeweiligen Zellengefäß 16 dienen. Die Vergußleitbrücken 7 können in der Draufsicht verschiedene Grundformen aufweisen. Bei dem vorliegenden Akkumulator gemäß Figur 1 ist die Grundform der Vergußleitbrücke 7 jeweils dem freien Bereich über dem Plattenblock angepaßt, wobei sich dieser freie Bereich über dem Plattenblock bei den in Reihe am Anfang und am Ende angeordneten Zellen aufgrund der Form der Polbrücken 3a und 3b mit Endpolen 4 von derjenigen der übrigen Zellen, welche in Reihe zwischen den beiden Endzellen angeordnet sind, unterscheidet.

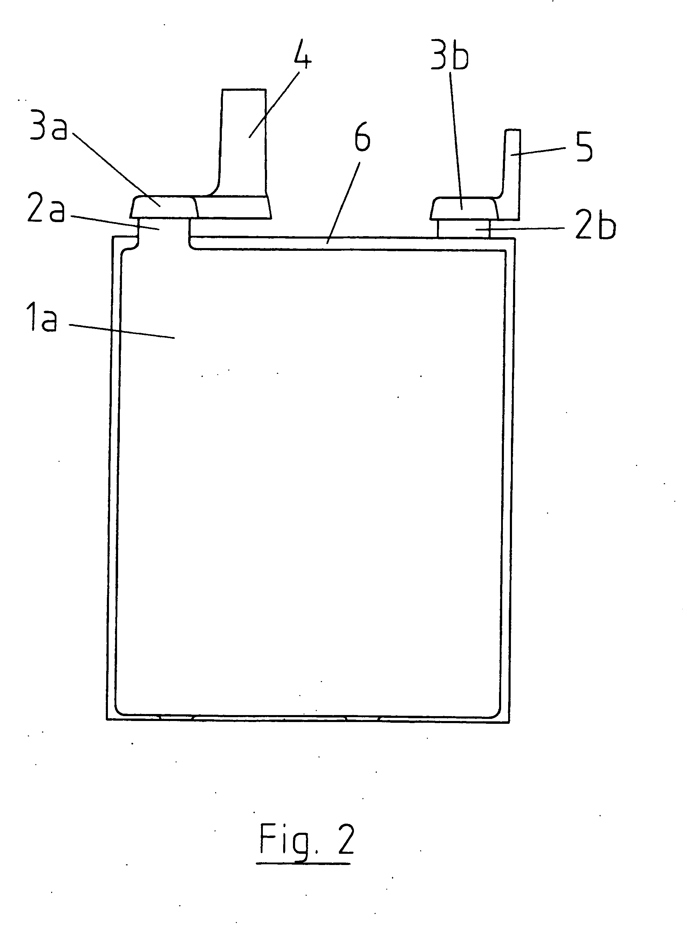

Figur 2 zeigt eine Zelle im Querschnitt entlang der Ebene einer Platte 1a im Plattenblock, wobei es sich um eine Zelle mit Endpol 4 am Anfang oder am Ende einer in Reihe miteinander verbundenen Anzahl von Zellen handelt. Die Platte 1a weist eine in vertikaler Richtung nach oben gerichtete Fahne 2a auf, die mit einer Polbrücke 3a verbunden ist. Über die Polbrücke 3a ist die Platte 1a mit allen übrigen Platten des gleichen Plattensatzes elektrisch verbunden. Die Platten des gegensätzlich gepolten Plattensatzes (nicht dargestellt) sind ebenfalls über Fahnen 2b und eine Polbrücke 3b elektrisch leitend miteinander verbunden. Die Polbrücken 3a und 3b sind über dem Plattenblock auf einander gegenüberliegenden Seiten des Zellengefäßes angeordnet. Die Polbrücke 3b weist einen Interzellverbinder 5 auf, über den die Zelle mit der Polbrücke des entgegengesetzt gepolten Plattensatzes der nächsten Zelle verbunden ist.

Aus Figur 2 wird deutlich, daß die schwächsten Stellen der dargestellten Zelle die Verbindung der Platten mit den Polbrücken 3a und 3b, nämlich die Fahnen 2a und 2b, sind. Bei starker Schwingungs- bzw. Rüttelbelastung des Akkumulators neigen diese Verbindungen dazu, abzureißen oder abzubrechen.

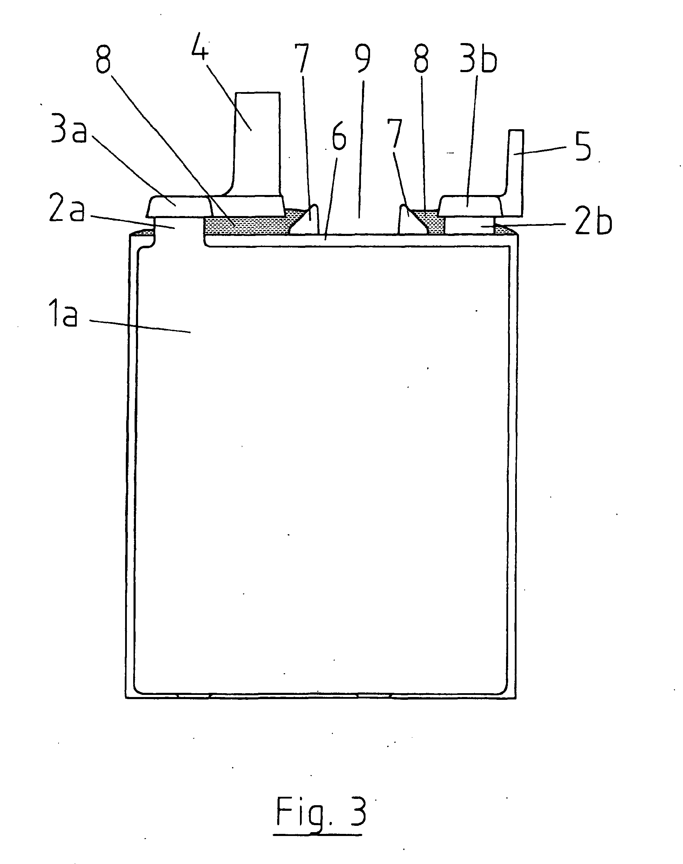

Figur 3 zeigt die gleiche Darstellung der Zelle aus Figur 2, jedoch mit der erfindungsgemäßen Vergußleitbrücke 7 und eingebrachter und ausgehärteter Vergußmasse 8. Die Höhe des Profils der Vergußleitbrücke 7 erstreckt sich in vertikaler Richtung über den tiefsten Punkt der Polbrücken, so daß die Vergußmasse 8 beim Einfüllen in fließfähigem Zustand den Zwischenraum zwischen dem Plattenblock und den Polbrücken vollständig ausfüllt und damit nach dem Erhärten die relative Position der Polbrücken 3a und 3b zu dem Plattenblock fixiert. Darüber hinaus verläuft die Vergußmasse zwischen den Fahnen 2a und 2b der Platten des Plattenblocks, so daß diese nach dem Aushärten der Vergußmasse 8 darin fixiert sind. Durch die Vergußleitbrücke 7 wird sichergestellt, daß die Vergußmasse 8 beim Einbringen sich nicht vollständig über dem Plattenblock verteilt und einen freien Bereich 9 über dem Plattenblock für das spätere Einfüllen des Gelelektrolyten freiläßt. Beim Einbringen der Vergußmasse 8 ist zu beachten, daß sie nur außerhalb des von Vergußmasse freizuhaltenden Bereichs 9, um die Außenseiten der Vergußleitbrücke 7 herum eingefüllt wird. Der äußere Bereich des Profils der Vergußleitbrücke 7 ist mit schrägen Ablaufflächen versehen, so daß die Vergußmasse 8 beim Einbringen von dem freizuhaltenden Bereich 9 weg und unter die Polbrücken 3a und 3b fließt.

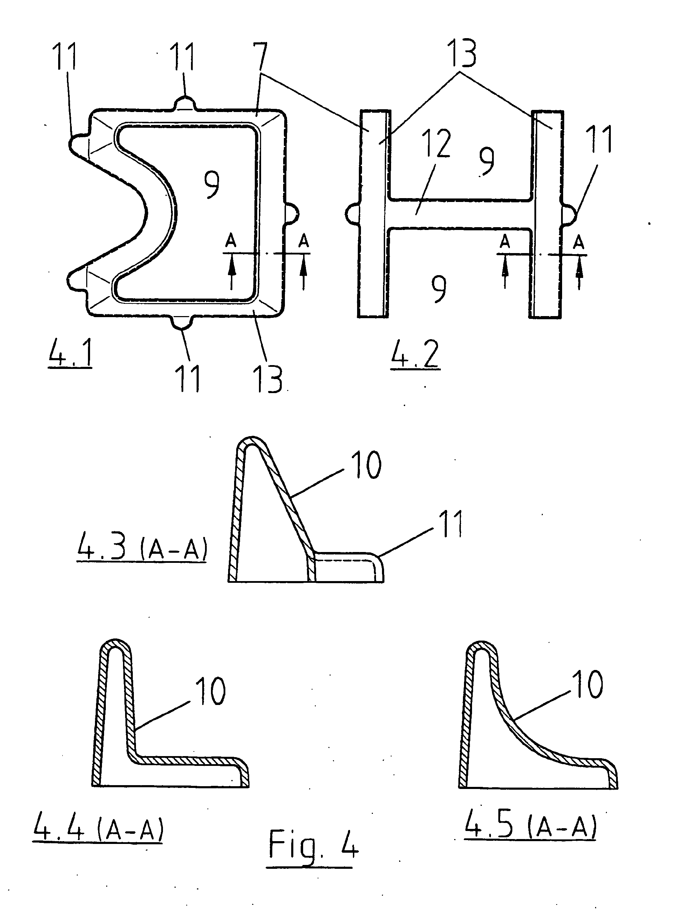

Die Figuren 4.1 und 4.2 zeigen zwei verschiedene Ausführungsformen erfindungsgemäßer Vergußleitbrücken 7 in der Draufsicht. Die in Figur 4.1 dargestellte Vergußleitbrücke 7 besteht aus einem um den auf der Oberfläche eines Plattenblocks freizuhaltenden Bereich 9 in sich geschlossenen Profil 13. Das Profil ist an mehreren Stellen mit Distanzhaltern 11 versehen, die das Positionieren der Vergußleitbrücke 7 in dem Zellengefäß auf dem Plattenblock erleichtern und die Vergußleitbrükke 7 in einem Abstand von den Wänden des Zellengefäßes halten. Durch Einhalten eines seitlichen Abstandes zwischen der Vergußleitbrücke 7 und den Zellenwänden wird sichergestellt, daß die Vergußmasse bei dieser Ausführungsform der erfindungsgemäßen Vergußleitbrücke 7 mit den seitlichen Wänden der Zellengefäße und gleichzeitig mit den daran angrenzenden Oberflächenbereichen des Plattenblocks in Berührung kommt. Hierdurch wird eine verbesserte Fixierung des Plattenblocks in dem Zellengefäß sichergestellt.

Figur 4.2 zeigt eine alternative Ausführungsform der erfindungsgemäßen Vergußleitbrücke 7 mit zwei im wesentlichen geradlinigen Profilteilen 13, welche durch ein Distanzstück 12 miteinander verbunden und im wesentlichen parallel und in einem Abstand zueinander angeordnet sind. Diese Ausführungsform der erfindungsgemäßen Vergußleitbrücke wird vor dem Einbringen der Vergußmasse so auf den Plattenblock aufgelegt, daß die beiden Profilteile 13 jeweils zu einer der beiden in der Zelle einander gegenüberliegenden Polbrücken über dem Plattenblock ausgerichtet sind. Die Länge der beiden Profilteile ist so ausgewählt, daß die Enden der Profilteile die seitlichen Wände des Zellengefäßes berühren, um ein Einfließen der Vergußmasse in den freizuhaltenden Bereich 9 im wesentlichen auszuschließen. Die Ausführungsform der Vergußleitbrücke gemäß Figur 4.2 hat gegenüber derjenigen aus Figur 4.1 den Vorteil, daß der freie Bereich 9 für das Einfüllen des Elektrolyten über dem Plattenblock größer ist und sich über die gesamte Breite des Plattenblocks erstreckt. Demgegenüber hat die Ausführungsform gemäß Figur 4.1 den Vorteil, daß die gesamte über dem Plattenblock aufgebrachte Vergußmasse zusammenhängend bleibt und als ein einziges Stück aushärtet, wogegen es bei Verwendung der Vergußleitbrücke gemäß Figur 4.2 zwei voneinander getrennte Vergussbereiche sind, die jeweils die schwingungs- bzw. rüttelempfindlichen Bereiche der Zelle an den Fahnen der Elektrodenplatten und zwischen dem Plattenblock und den Polbrücken fixieren.

Die Figuren 4.3, 4.4 und 4.5 zeigen jeweils verschiedene Profile der Vergußleitbrücken 7 aus den Figuren 4.1 bzw. 4.2 im Querschnitt entlang der Linie A-A. Die Profile weisen jeweils eine Ablauffläche 10 auf, über welche die Vergußmasse beim Einbringen in Richtung der Polbrücken abfließen kann. In Figur 4.3 ist zusätzlich ein Distanzhalter 11 dargestellt, wie er oben beschrieben ist.

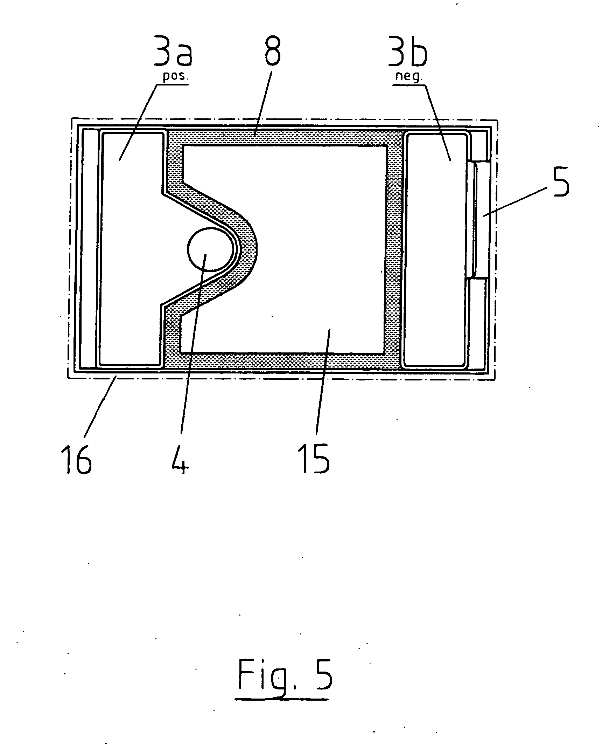

Figur 5 zeigt eine Zelle mit einem Plattenblock 15, wie sie auch Teil des Akkumulators aus Figur 1 ist, wobei bei der Zelle aus Figur 5 bereits Vergußmasse 8 zur Fixierung der einzelnen Teile der Zelle eingebracht wurde.

### Bezugszeichenliste

- 1a, 1b: pos. und neg. Elektrodenplatten
- 2a, 2b: Fahnen der Elektrodenplatten
- 3a, 3b: Polbrücken
- 4: Endpole
- 5: Interzellverbinder
- 6: Separatoren
- 7: Vergussleitbrücke
- 8: Vergussmasse
- 9: freier bzw. freizuhaltender Bereich über dem Plattenblock
- 10: Ablauffläche
- 11: Distanzhalter
- 12: Distanzstück
- 13: Profil der Vergussleitbrücke
- 14a, 14b: Plattensatz
- 15: Plattenblock
- 16: Zellengefäß
- 20: Gehäuse
- 21: Akkumulatorzellen

## Patentansprüche

1. Schwingungsfester Akkumulator mit einem Gehäuse (20), das ein oder mehrere Zellengefäße (16) mit jeweils einem Plattenblock (15) mit positiven und negativen Plattensätzen umfasst, wobei die einzelnen Platten (1a, 1b) in einem Plattenblock (15) durch Separatoren (6) voneinander getrennt sind, die Platten (1a, 1b) jedes Plattensatzes Fahnen (2a, 2b) aufweisen und durch Polbrücken (3a, 3b) elektrisch miteinander verbunden sind, **dadurch gekennzeichnet, dass** eine aushärtbare Vergussmasse (8) vorgesehen ist, welche den Plattenblock (15) in einem Zellengefäß (16) im wesentlichen schwingungsfest fixiert, wobei die Vergussmasse (8) über den Platten (1a, 1b) des Plattenblocks (15) angeordnet ist und den Zwischenraum zwischen der Oberseite des Plattenblocks (15) und den Polbrücken (3a, 3b) wenigstens teilweise ausfüllt und wobei eine Vergussleitbrücke (7) auf der Oberseite des Plattenblocks (15) vorgesehen ist, welche einen von Vergussmasse (8) freien Bereich auf der Oberseite des Plattenblocks (15) begrenzt.

2. Schwingungsfester Akkumulator nach Anspruch 1, **dadurch gekennzeichnet, dass** die Vergussleitbrücke (7) aus Kunststoff, vorzugsweise aus elektrolytbeständigem Kunststoff hergestellt ist.

3. Schwingungsfester Akkumulator nach einem der Ansprüche 1 oder 2, **dadurch gekennzeichnet, dass** die Vergussleitbrücke (7) aus Polyvinylchlorid (PVC), Polypropylen (PP), Polyethylen (PE), Polystyrol (PS), Acrylbutadienstyrol (ABS), Styrolacrylnitril (SAN) oder Polycarbonat hergestellt ist.

4. Schwingungsfester Akkumulator nach einem der Ansprüche 1 bis 3, **dadurch gekennzeichnet, dass** die Vergussleitbrücke (7) aus einem um den freien Bereich auf der Oberseite des Platten blocks (15) in sich geschlossen verlaufenden Profil besteht.

5. Schwingungsfester Akkumulator nach einem der Ansprüche 1 bis 4, **dadurch gekennzeichnet, dass** die Vergussmasse (8) zusätzlich den oberen Zwischenraum zwischen den äußeren Platten (1a, 1 b) des Plattenblocks (15) und den Seitenwänden des Zellengefäßes (16) wenigstens teilweise ausfüllt.

6. Schwingungsfester Akkumulator nach einem der Ansprüche 1 bis 3, **dadurch gekennzeichnet, dass** die Vergussleitbrücke (7) zwei im wesentlichen geradlinige Profilteile aufweist, welche durch ein Distanzstück (12) miteinander verbunden und im wesentlichen parallel und in einem Abstand zueinander angeordnet sind.

7. Schwingungsfester Akkumulator nach einem der Ansprüche 1 bis 6, **dadurch gekennzeichnet, dass** die Vergussleitbrücke (7) auf der Seite des Profils, die dem von Vergussmasse (8) freien Bereich abgewandt ist, Ablaufflächen (10) für ein Ablaufen der Vergussmasse (8) beim Einbringen in den Akkumulator aufweist.

8. Verfahren zur Herstellung eines schwingungsfesten Akkumulators, bei dem man in ein Gehäuse (20), das ein oder mehrere Zellengefäße (16) aufweist, jeweils einem Plattenblock (15) mit positiven und negativen Plattensätzen in jeweils ein Zellengefäß (16) einsetzt, wobei die einzelnen Platten (1a, 1b) in einem Plattenblock (15) durch Separatoren (6) voneinander getrennt sind und die Platten (1a, 1b) jedes Plattensatzes Fahnen (2a, 2b) aufweisen, Polbrücken (3a, 3b) anbringt, welche die Platten (1a, 1b) jedes Plattensatzes elektrisch miteinander verbinden, auf die Oberseite des Plattenblocks (15) eine Vergussleitbrücke (7) auflegt und eine aushärtbare Vergussmasse (8) so einbringt, dass sie über den Platten (1a, 1 b) des Plattenblocks (15) angeordnet ist, den Zwischenraum zwischen der Oberseite des Plattenblocks (15) und den Polbrücken (3a, 3b) wenigstens teilweise ausfüllt und die Vergussleitbrücke (7) einen von Vergussmasse (8) freien Bereich auf der Oberseite des Plattenblocks (15) begrenzt.

## Claims

1. A vibration-resistant accumulator with a housing (20), which comprises one or more cell boxes (16) each with a plate block (15) with positive and negative plate groups, with the individual plates (1a, 1b) in a plate block (15) separated from one another by separators (6), the plates (1a, 1b) of each plate group having lugs (2a, 2b) and being connected together electrically through cell connectors (3a, 3b), **characterized in that** a hardenable sealing compound (8) is provided, which fixes the plate block (15) in a cell box (16) in a substantially vibration-resistant manner, with the sealing compound (8) arranged above the plates (1a, 1b) of the plate block (15) and at least partially filling the space between the top of the plate block (15) and the cell connectors (3a, 3b) and with a sealant guide bridge (7) provided on the top of the plate block (15), delimiting a region that is free from sealing compound (8) on the top of the plate block (15).

2. A vibration-resistant accumulator according to claim 1, **characterized in that** the sealant guide bridge (7) is made of plastic, preferably of electrolyte-resistant plastic.

3. A vibration-resistant accumulator according to one of claims 1 or 2, **characterized in that** the sealant guide bridge (7) is made of polyvinyl chloride (PVC), polypropylene (PP), polyethylene (PE), polystyrene (PS), acrylonitrile butadiene styrene (ABS), styrene acrylonitrile (SAN) or polycarbonate.

4. A vibration-resistant accumulator according to one of claims 1 to 3, **characterized in that** the sealant guide bridge (7) consists of a closed profile around the free region on the top of the plate block (15).

5. A vibration-resistant accumulator according to one of claims 1 to 4, **characterized in that** the sealing compound (8) in addition at least partially fills the upper space between the outer plates (1a, 1b) of the plate block (15) and the side walls of the cell box (16).

6. A vibration-resistant accumulator according to one of claims 1 to 3, **characterized in that** the sealant guide bridge (7) has two substantially rectilinear profile parts which are joined together by a distance piece (12) and are arranged substantially parallel to one another and with a gap between them.

7. A vibration-resistant accumulator according to one of claims 1 to 6, **characterized in that** on the side of the profile turned away from the region free from sealing compound (8), the sealant guide bridge (7) has run-off surfaces (10) for draining of the sealing compound (8) when it is introduced into the accumulator.

8. A method of manufacture of a vibration-resistant accumulator, in which a plate block (15) with positive and negative plate groups is placed in each cell box (16) in a housing (20) that has one or more cell boxes (16), with the individual plates (1a, 1b) in a plate block (15) separated from one another by separators (6) and the plates (1a, 1b) of each plate group having lugs (2a, 2b), cell connectors (3a, 3b) are applied, which connect the plates (1a, 1b) of each plate group together electrically, a sealant guide bridge (7) is laid on the top of the plate block (15) and a hardenable sealing compound (8) is introduced in such a way that it is arranged above the plates (1a, 1b) of the plate block (15), at least partially fills the space between the top of the plate block (15) and the cell connectors (3a, 3b), and the sealant guide bridge (7) delimits a region that is free from sealing compound (8) on the top of the plate block (15).

## Revendications

1. Accumulateur antivibratile avec un boîtier (20) qui contient un ou plusieurs bacs (16) d'élément avec respectivement un bloc (15) de plaques avec des faisceaux de plaques positifs et négatifs, les différentes plaques (1a, 1b) dans un bloc (15) de plaques étant séparées l'une de l'autre par des séparateurs (6), les plaques (1a, 1b) de chaque faisceau de plaques présentant des talons (2a, 2b) et étant électriquement reliées entre elles par des barrettes (3a, 3b), **caractérisé en ce qu'**un compound durcissable (8) est prévu, lequel fixe le bloc (15) de plaques dans un bac (16) d'élément de façon essentiellement antivibratile, le compound (8) étant disposé au-dessus des plaques (1a, 1b) du bloc (15) de plaques et remplissant au moins en partie l'espace intermédiaire entre la face supérieure du bloc (15) de plaques et les barrettes (3a, 3b) et un pont (7) de guidage du compound étant prévu sur la face supérieure du bloc (15) de plaques, lequel délimite une zone vierge de compound (8) sur la face supérieure du bloc (15) de plaques.

2. Accumulateur antivibratile selon la revendication 1, **caractérisé en ce que** le pont (7) de guidage du compound est fabriqué en plastique, de préférence en plastique résistant à l'électrolyse.

3. Accumulateur antivibratile selon la revendication 1 ou 2, **caractérisé en ce que** le pont (7) de guidage du compound est fabriqué en chlorure de polyvinyle (PVC), en polypropylène (PP), en polyéthylène (PE), en polystyrène (PS), en acrylnitrile-styrène-butadiène (ABS), en styrène-acrylo-nitrile (SAN) ou en polycarbonate.

4. Accumulateur antivibratile selon l'une des revendications 1 à 3, **caractérisé en ce que** le pont (7) de guidage du compound se compose d'un profilé s'étendant de façon contenue autour de la zone vierge sur la face supérieure du bloc (15) de plaques.

5. Accumulateur antivibratile selon l'une des revendications 1 à 4, **caractérisé en ce que** le compound (8) remplit au moins en partie l'espace intermédiaire supérieur entre les plaques extérieures (1a, 1b) du bloc (15) de plaques et les parois latérales du bac (16) d'élément.

6. Accumulateur antivibratile selon l'une des revendications 1 à 3, **caractérisé en ce que** le pont (7) de guidage du compound présente deux parties profilées essentiellement rectilignes, lesquelles sont reliées entre elles par une pièce intercalaire (12) et sont essentiellement disposées en parallèle et à distance l'une de l'autre.

7. Accumulateur antivibratile selon l'une des revendications 1 à 6, **caractérisé en ce que** le pont (7) de guidage du compound présente, sur la face du profilé qui est opposée à la zone vierge de compound (8), des surfaces (10) d'écoulement pour un écoulement du compound lors de l'application dans l'accumulateur.

8. Procédé pour fabriquer un accumulateur antivibratile, dans lequel on installe, dans un boîtier (20) qui présente un ou plusieurs bacs (16) d'élément, respectivement un bloc (15) de plaques avec des faisceaux de plaques positifs et négatifs dans respectivement un bac (16) d'élément, les différentes plaques (1a, 1b) dans un bloc (15) de plaques étant séparées l'une de l'autre par des séparateurs (6) et les plaques (1a, 1b) de chaque faisceau de plaques présentant des talons (2a, 2b), on ajoute des barrettes (3a, 3b) qui relient électriquement entre elles les plaques (1a, 1 b) de chaque faisceau de plaques, on place un pont (7) de guidage de compound sur la face supérieure du bloc (15) de plaques et on applique un compound durcissable (8) de sorte qu'il soit disposé au-dessus des plaques (1a, 1b) du bloc (15) de plaques, qu'il remplisse au moins en partie l'espace intermédiaire entre la face supérieure du bloc (15) de plaques et les barrettes (3a, 3b) et que le pont (7) de guidage du compound délimite une zone vierge sur la face supérieure du bloc (15) de plaques.
